# EUROPÄISCHE PATENTSCHRIFT

(11) **EP 2 331 642 B1**
(45) Veröffentlichungstag und Bekanntmachung des Hinweises auf die Patenterteilung: **15.01.2014**
(21) Anmeldenummer: 09783527.6
(22) Anmeldetag: 29.09.2009
(51) Int. Cl.: C09D 7/12, B27N 1/00, C08L 79/02, C08L 39/02, E04F 15/02

(54) **PANEEL, INSBESONDERE FUSSBODENPANEEL**
PANELS, IN PARTICULAR FLOOR PANELS
PANNEAU, EN PARTICULIER PANNEAU DE PLANCHER

(30) Priorität: 02.10.2008 DE 102008049941
(43) Veröffentlichungstag der Anmeldung: 15.06.2011
(73) Patentinhaber: Fritz Egger GmbH & Co. OG, 3105 Unterradlberg (AT)
(72) Erfinder: WOLF, Ansgar, 59602 Rüthen (DE); DIETZ, Thorsten, 59929 Brilon (DE)
(74) Vertreter: Cohausz & Florack
(86) Internationale Anmeldenummer: PCT/EP2009/062588
(87) Internationale Veröffentlichungsnummer: WO 2010/037733

(56) Entgegenhaltungen:
- WO-A1-02/36637
- WO-A1-2008/076059
- WO-A1-2008/078181
- CN-Y- 201 078 072
- JP-A- 11 314 205
- US-A1- 2003 064 160
- US-A1- 2006 222 877

## Beschreibung

Die Erfindung betrifft ein Paneel, insbesondere Fußbodenpaneel, mit einer Trägerplatte aus Holzwerkstoff, deren Sicht- oder Oberseite mit einer durch ein Druckverfahren direkt aufgebrachten Dekorbeschichtung versehen ist und deren Rückseite mit einem Rückstrich, vorzugsweise einem farbigem Rückstrich versehen ist, wobei die Dekorbeschichtung aus einer auf die Trägerplatte aufgetragenen farbigen Grundschicht und einem auf die Grundschicht mittels einer oder mehrerer gravierter Druckwalzen aufgedruckten Holz-, Fliesen- oder Fantasiedekor gebildet ist.

Paneele mit einer Dekorbeschichtung werden vielfach als Fußbodenpaneele und zur Verkleidung von Wänden und Decken eingesetzt. Diese weisen zumeist eine rechteckige Form auf und sind an ihren Kanten mit Profilen versehen, die eine Ankoppelung benachbarter Paneele erlauben, um einen großflächigen Belag schaffen zu können. Weit verbreitet werden dafür Faserplatten, bevorzugt sogenannte, nach dem Trockenverfahren hergestellte, MDF-Platten (Medium Density Fiberboard) oder HDF-Platten (High Density Fiberboard) verwendet. Neben dem direkten Bedrucken können auch mit einem Kunstharz imprägnierte und vorgetrocknete Papiere unter hoher Hitze und Druck direkt auf die Plattenoberflächen gepresst werden, um das gewünschte Dekor aufzubringen. Da diese Imprägnate das Bestreben haben, beim Verpressen zu schrumpfen, erzeugen sie eine Spannung, weshalb diese Platten stets beidseitig mit einem imprägnierten Papier versehen werden müssen, um eine spannungsbedingte Biegung der Platten zu verhindern. Es wird auf der der Sichtseite abgewandten Seite (Rückseite) also ein sogenannter Gegenzug aufgebracht, der gewährleisten soll, dass ein aus der Platte hergestelltes Paneel eben bleibt, also nicht "schüsselt".

Neben den laminatbeschichteten Faserplatten werden in jüngerer Zeit auch direkt beschichtete Platten für Paneele der genannten Art eingesetzt. Solche Paneele sind bspw. aus der EP 1 645 339 A1 bekannt. Dabei werden die Faserplatten mit flüssigen Beschichtungsmitteln versehen, wobei auf eine eingefärbte Grundschicht ein Dekor, beispielsweise ein Holzdekor gedruckt wird und abschließend ein oder mehrere transparente Versiegelungsschichten aufgetragen werden. Solcherart hergestellte Beschichtungen weisen kein Zugverhalten auf, weshalb solche Paneele auf ihrer Rückseite zumindest aus Gründen der Formstabilität nicht zwingend beschichtet werden müssen. Bekannte rückseitig aufgebrachte Beschichtungen - auch als Rückstrich bezeichnet - dienen bei diesen direkt oder indirekt bedruckten Faserplatten vornehmlich der Farbgebung, die dem betreffenden Paneel ein höherwertiges Aussehen verleihen soll. Es ist bei diesen Faserplatten aber auch möglich, auf einen Rückstrich gänzlich zu verzichten.

Aus der US 2006/0222877 A1 ist ein Verfahren zur Verringerung von Formaldehydemissionen aus einem auf Holz basierenden Produkt bekannt. In diesem Dokument ist ein furniertes Fußbodenpaneel offenbart, das aus einer als Kern dienenden HDF-Trägerplatte gebildet ist, die beidseitig unter Verwendung eines Harnstoff-Formaldehyd-Klebemittels mit 0,6 mm dickem Eichenfurnier beschichtet ist. Die als sichtbare Oberfläche dienende Oberseite des Fußbodenpaneels wird mit einem UV-härtbaren Lack beschichtet, der eine Verschleißschutzschicht bildet und zugleich als Emissionsbarriere wirkt. Vor der

Verklebung wird auf die Oberfläche der rückseitigen Furnierschicht eine wässrige Lösung aus 12 Gew.-% Polyvinylamin aufgebracht.

Aus der WO 02/36637 A1 sind wasserhaltige Beschichtungen zur Steigerung der Ausgiebigkeit, Verringerung der Faseraufhöhung und Steigerung des Widerstandes gegen Feuchte bekannt. Die dort offenbarten Beschichtungen enthalten CarboxymethylCellulose-Acetatbutyrate und sind insbesondere für mitteldichte Faserplatten bestimmt.

Bei Paneelen ohne oder mit rein farbgebender rückseitiger Beschichtung (Rückstrich) besteht das Problem, dass Feuchtigkeit aus dem Untergrund sehr leicht in die Trägerplatte diffundieren kann, was zu ungewünschten Quellungen führt, was insbesondere an den Paneelstößen bereits verlegter, also über die Kantenprofile verbundener Paneele, sichtbar wird.

Des Weiteren besteht bei aus Holzwerkstoff hergestellten Paneelen, egal, ob sie direktbeschichtet oder laminatbeschichtet sind, das Problem einer Ausdampfung von flüchtigen Inhaltsstoffen aus der Trägerplatte. Insbesondere bestehen hinsichtlich der Emissionen von Formaldehyd bestimmte Grenzwerte, die einzuhalten sind.

Eine deutliche Unterschreitung der zur Zeit gültigen maximal zulässigen Formaldehydemissionen, ist bei direkt beschichteten Paneelen nur erschwert möglich, da durch den fehlenden Gegenzug ein Ausdampfen des in der Trägerplatte üblicherweise vorhandenen Formaldehyds kaum gebremst wird.

Der vorliegenden Erfindung liegt die Aufgabe zugrunde, ein Paneel der eingangs genannten Art zu schaffen, das gegenüber herkömmlichen Paneelen dieser Art verbesserte Eigenschaften hinsichtlich der Beständigkeit bei Belastung durch Feuchtigkeit sowie der Emission von Luftschadstoffen ausweist.

Gelöst wird diese Aufgabe durch ein Paneel mit den Merkmalen des Anspruchs 1. Bevorzugte und vorteilhafte Ausgestaltungen des erfindungsgemäßen Paneels sind in den Unteransprüchen angegeben.

Das erfindungsgemäße Paneel weist eine Trägerplatte aus Holzwerkstoff auf, deren Sicht- oder Oberseite mit einer durch ein Druckverfahren direkt aufgebrachten Dekorbeschichtung versehen ist und deren Rückseite mit einem Rückstrich, vorzugsweise einem farbigem Rückstrich versehen ist, wobei der Rückstrich mindestens eine den Wasserdampfdiffusions-Durchlasswiderstand erhöhende Komponente und mindestens eine luftschadstoffbindende, insbesondere Formaldehyd bindende Komponente enthält, und wobei der Rückstrich des erfindungsgemäßen Paneels eine Wasserdampfdiffusionswiderstandszahl von mindestens 150, vorzugsweise von mindestens 200, besonders bevorzugt von mindestens 300 aufweist, und wobei das Material des Rückstrichs ein Hydrophobierungsmittel enthält.

Der Wasserdampfdiffusions-Durchlasswiderstand ist der Kehrwert des Wasserdampfdiffusions-Durchlasskoeffizienten. Letzterer ist der Quotient aus der Wasserdampfdiffusionsstromdichte und der Wasserdampfdruckdifferenz zwischen den beiden Seiten des Probekörpers. Die Wasserdampfdiffusionsstromdichte bezeichnet die Masse an Wasserdampf, die je Flächen- und Zeiteinheit durch den Probekörper transportiert wird.

Das erfindungsgemäße Paneel zeichnet sich gegenüber bekannten Paneelen dieser Art durch eine erheblich verringerte Dickenquellung und verringerte Luftschadstoffemissionen, insbesondere erheblich verringerte Formaldehydemissionen aus.

Nach einer bevorzugten Ausgestaltung der Erfindung besteht die mindestens eine luftschadstoffbindende Komponente des Rückstrichs aus Polyamin bzw. enthält Polyamin. Bei dem in dem Rückstrich verwendeten Polyamin bzw. Polyaminen handelt es sich vorzugsweise um Polyaminoimin, Polyethylenimin, Polyvinylamin und/oder Mischungen hiervon. Diese Polymere haben sich als effektive Formaldehydfänger erwiesen. Mit dem erfindungsgemäßen Rückstrich versehene Proben wiesen bei der Prüfung mit der Gasanalyse gemäß EN 717-2 eine um etwa 50% geringere Formaldehydabgabe auf, als solche mit herkömmlichem Rückstrich.

Als den Wasserdampfdiffusions-Durchlasswiderstand erhöhende Komponente enthält der Rückstrich vorzugsweise mindestens ein Polymer auf der Basis von Vinylacetat, Acrylat, Maleinat, Methacrylat, Fumarat, Itaconat, Ethylen, Propylen, Butylen, Butadien, Isopren und/oder Vinylverbindungen wie Vinylether und/oder Gemische hiervon. Insbesondere kann es sich bei der den Wasserdampfdiffusions-Durchlasswiderstand erhöhenden Komponente um ein Copolymer handeln, das beispielsweise aus einem vinylaromatischen Monomer, z.B. Styrol, und/oder Butadien und/oder Isopren aufgebaut ist. Der Wasserdampfdiffusions-Durchlasswiderstand der mit dem Rückstrich versehenen Trägerplatte ist vorzugsweise um mindestens 200 x 10⁶ (m² s Pa)/kg, bevorzugt um mindestens 260 x 10⁶ (m² s Pa)/kg, besonders bevorzugt um mindestens 290 x 10⁶ (m² s Pa)/kg gegenüber der unbehandelten Trägerplatte erhöht.

Die Wasserdampfdiffusionswiderstandszahl ist der Quotient aus dem Wasserdampfdiffusionsleitkoeffizienten der Luft und dem des betrachteten Stoffes. Die Wasserdampfdiffusionswiderstandszahl gibt somit an, wievielmal größer der Widerstand des betrachteten Stoffes ist, verglichen mit einer gleich dicken Schicht ruhender Luft bei derselben Temperatur. Poröse Holzfaserplatten haben eine Wasserdampfdiffusionswiderstandszahl von ca. 5, während harte Holzfaserplatten eine Wasserdampfdiffusionswiderstandszahl von ca. 70 aufweisen. Stoffe mit einer Wasserdampfdiffusionswiderstandszahl größer/gleich 1.500 werden als Dampfsperren bezeichnet.

Der erfindungsgemäße Rückstrich erfordert gegenüber solchen, die im Wesentlichen nur der Farbgebung dienen, keiner besonders stark erhöhten Auftragsmenge. Versuche seitens der Anmelderin haben überraschender Weise ergeben, dass bereits eine Erhöhung der Auftragsmenge um ca. 40 bis 60% gegenüber der Auftragsmenge eines herkömmlichen farbgebenden Rückstrichs ausreichend ist, um die Dickenquellung bei Feuchtigkeitsbelastung deutlich zu reduzieren. Dementsprechend sieht eine bevorzugte Ausgestaltung des erfindungsgemäßen Paneels vor, dass dessen Rückstrich ein Flächengewicht im Bereich von 9 bis 20 g/m², vorzugsweise im Bereich von 12 bis 16 g/m² hat.

Eine weitere vorteilhafte Ausgestaltung des erfindungsgemäßen Paneels ist dadurch gekennzeichnet, dass die Längsund/oder Querstoßseiten der Trägerplatte ebenfalls mit dem Material des Rückstrichs beschichtet sind. Hierdurch können die Beständigkeit bei Belastung durch Feuchtigkeit sowie das Vermögen flüchtige Schadstoffe der Trägerplatte zu binden weiter verbessert werden.

Nachfolgend wird die Erfindung anhand einer ein Ausführungsbeispiel darstellenden Zeichnung näher erläutert. Es zeigen:

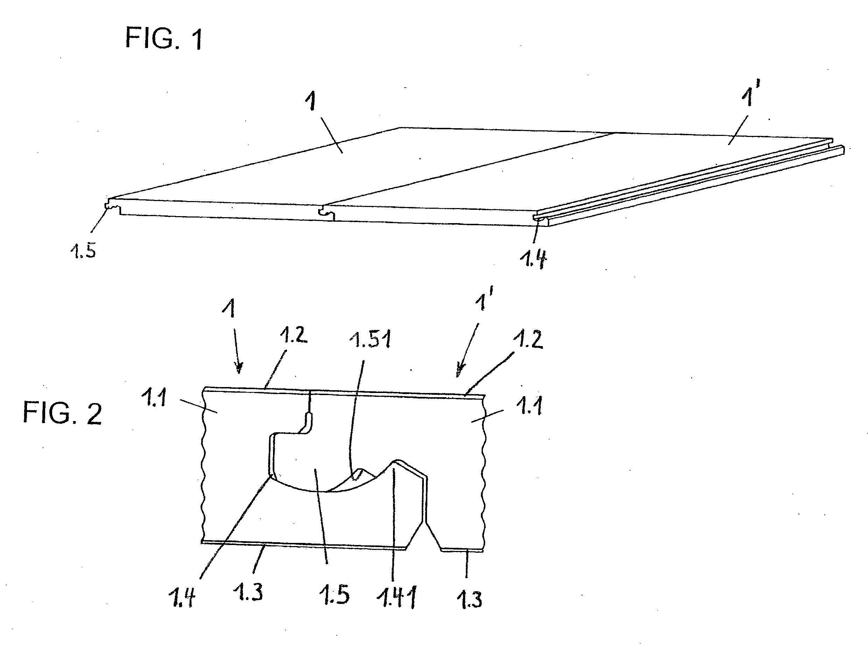

- Fig. 1: eine schematische Darstellung zweier miteinander verbundener Paneele, in perspektivischer Ansicht; und
- Fig. 2: eine vergrößerte Detaildarstellung des Verbindungsbereichs der Paneele der Fig. 1, in Vorderseitenansicht.

In der Zeichnung sind zwei miteinander verbundene Paneele 1, 1' dargestellt. Die Paneele 1, 1' sind als Fußbodenpaneele ausgebildet. Ebenso können sie jedoch auch zur Verkleidung von Wänden und Decken eingesetzt werden.

Das jeweilige Paneel weist eine Trägerplatte 1.1 aus Holzwerkstoff auf. Es handelt sich dabei vorzugsweise um eine MDF- oder HDF-Platte. Die Sicht- oder Oberseite der Trägerplatte 1.1 ist mit einer durch ein Direkt- oder Indirektdruckverfahren aufgebrachten Dekorbeschichtung 1.2 versehen.

Zur Herstellung der Paneele 1, 1' wird auf die geschliffene Oberseite einer großformatigen Trägerplatte aus Holzwerkstoff zunächst eine Grundierung (Grundschicht) aufgetragen. Die Grundschicht ist vorzugsweise farbig ausgeführt. Ihre Farbe entspricht beispielsweise dem Grundfarbton eines Holz-, Fliesen- oder Fantasiedekors, das anschließend mittels einer oder mehrerer gravierter Druckwalzen aufgedruckt wird. Als Druckfarbe kommen überwiegend Farbsysteme auf wässriger Basis zum Einsatz. Auf das Dekor werden dann ein oder mehrere transparente Versiegelungsschichten aufgetragen. Das hierzu verwendete flüssige Beschichtungsmaterial besteht ebenfalls aus durch UV-Strahlen härtbarem Lack und enthält vorzugsweise die Abriebfestigkeit erhöhende Teilchen, beispielsweise Korundpartikel. Die Versiegelungsschicht kann dabei mit einer an das Dekor angepassten dreidimensionalen Oberflächenstruktur versehen sein. Letztere wird beispielsweise vor der Aushärtung der Versiegelungsschicht mechanisch mittels einer strukturierten Walze (Prägewalze) erzeugt. Alternativ kann die an das Dekor, insbesondere Holzdekor angepasste dreidimensionale Oberflächenstruktur auch durch ein Direktoder Indirektdruckvorgang erzeugt werden.

Während die Oberseite der großformatigen Trägerplatte 1.1 mit der Dekorbeschichtung 1.2 versehen wird, wird auf deren Rückseite (Unterseite) ein Rückstrich 1.3 aufgetragen. Der Auftrag des Rückstrichs 1.3, der vorzugsweise farbig ausgeführt ist, erfolgt beispielsweise mittels Auftragswalzen. Der Rückstrich 1.3 ist physikalisch trocknend; hier kommen z.B. Düsentrockner zum Einsatz.

Nachdem die Dekorbeschichtung 1.2 einschließlich Versiegelungsschicht und der Rückstrich 1.3 ausreichend gehärtet sind, wird die so beidseitig beschichtete großformatige Trägerplatte 1.1 mittels einer Säge oder dergleichen in eine Vielzahl von Panellen 1, 1' unterteilt. In die Längsstoßseiten und gegebenenfalls auch die Querstoßseiten des jeweiligen Paneels 1, 1' werden danach Profile zur formschlüssigen Verbindung des Paneels 1 mit einem entsprechenden Paneel 1' eingefräst. Die Profile sind dabei als Nut 1.4 und Feder 1.5 ausgeführt.

Die in der Zeichnung dargestellten Verbindungselemente ermöglichen das Verlegen benachbarter Paneele 1, 1' über einen Zwischenschritt. Dazu werden die zu verbindenden Paneele 1, 1' in einem ersten Teilschritt in eine Position gebracht, in der die Vertiefung 1.51 der Feder 1.5 mit dem Vorsprung 1.41 der Nut 1.4 in Eingriff steht. Bei dieser Zwischenposition handelt es sich um eine sogenannte Einhebelposition, in der die beiden Paneele 1, 1' eine definierte Position zueinander einnehmen und bereits teilweise miteinander in Eingriff stehen. Anschließend wird durch Anwinkeln und Zusammenschieben (Einhebeln) der Paneele 1, 1' die endgültige Position erreicht. Dabei bleiben die Seitenkanten der Paneele 1, 1' in Kontakt, wodurch die Handhabung beim Verlegen der Paneele 1, 1' erleichtert wird.

Das Material des Rückstrichs 1.3 wird als flüssige Lösung bzw. Dispersion auf die Rückseite der Trägerplatte 1.1 aufgetragen. Erfindungsgemäß enthält das Rückstrichmaterial mindestens eine den Wasserdampfdiffusions-Durchlasswiderstand erhöhende Komponente und mindestens eine luftschadstoffbindende, insbesondere Formaldehyd bindende Komponente. Bei dem Lösemittel des Rückstrichmaterials handelt es sich vorzugsweise um Wasser, wobei in dem Lösemittel sehr feine Festharzpartikel dispergiert sind.

Die luftschadstoffbindende Komponente des Rückstrichs 1.3 ist aus Polyamin, vorzugsweise aus Polyaminoimin, Polyethylenimin, Polyvinylamin und/ oder Mischungen hiervon gebildet.

Um dem Rückstrich 1.3 einen ausreichend hohen Wasserdampfdiffusions-Durchlasswiderstand zu verleihen, enthält dessen Ausgangsmaterial mindestens ein Polymer auf der Basis von Vinylacetat, Acrylat, Methacrylat, Maleinat, Fumarat, Itaconat, Ethylen, Propylen, Butylen, Butadien, Isopren und/oder Vinylverbindungen wie Vinylether und/oder Gemische hiervon. Vorzugsweise enthält der Rückstrich 1.3 ein Copolymer als Wasserdampfdiffusions-Durchlasswiderstand erhöhende Komponente. Das Copolymer ist beispielsweise aus einem vinylaromatischen Monomer und/oder Butadien und/oder Isopren aufgebaut.

Der Wasserdampfdiffusions-Durchlasswiderstand von Bauprodukten kann nach EN ISO 12572 ermittelt werden. Es werden dazu hier Paneele mit dem erfindungsgemäßen Rückstrich 1.3 und ohne Rückstrich untersucht. Um den Einfluss der sichtseitigen Dekorbeschichtung 1.2 zu eliminieren, wurde die Dekorbeschichtung 1.2 der Paneele 1, 1' abgeschliffen. Aus den nun etwa 4 mm dicken Paneelen 1, 1' wurden Proben angefertigt und gemäß der angeführten Norm geprüft.

Die Verbesserung, ausgedrückt als Differenz der Wasserdampfdiffusions-Durchlasswiderstände der mit und ohne dem erfindungsgemäßen Rückstrich 1.3 versehenen Trägerplatten 1.1, beträgt mindestens 200 x 10⁶ m² s Pa/kg, bevorzugt mindestens 260 x 10⁶ m² s Pa/kg, und besonders bevorzugt mindestens 290 x 10⁶ m² s Pa/kg.

Der Rückstrich 1.3 ist so eingestellt, dass er eine Wasserdampfdiffusionswiderstandszahl von mindestens 150, vorzugsweise von mindestens 200 hat. Die Auftragsmenge bzw. das Flächengewicht des Rückstrichs 1.3 beträgt dabei mindestens 9 g/m², vorzugsweise im Mittel etwa 12 g/m² (+/- 2 g/m²).

Die Dickenquellung eines Paneels 1, 1' wird gemäß Anhang G der Norm EN 13329 ermittelt. Es wird dabei die Dickenzunahme von aus den Paneelen 1, 1' hergestellten Probekörpern ermittelt, die über 24 Stunden teilweise in ein Wasserbad eingebracht sind.

Durch den erfindungsgemäßen Rückstrich 1.3 lässt sich eine Verringerung der Dickenquellung gegenüber einer Probe ohne Rückstrich von im Mittel mindestens 2,5%, bevorzugt mindestens 4,5%, besonders bevorzugt mindestens 6% erreichen. Das erfindungsgemäße Paneel 1, 1' behält somit auch bei Belastung durch Feuchtigkeit eine hohe Maßhaltigkeit. Der Grad der Verminderung der Dickenquellung hängt dabei von der den Wasserdampfdiffusions-Durchlasswiderstand erhöhenden Komponente des Rückstrichs 1.3 und der Auftragsmenge des Rückstrichs 1.3 ab.

Die Formaldehydabgabe von Holzwerkstoffplatten nach der Gasanalysenmethode wird üblicherweise nach EN 717-2 geprüft. Mit dem erfindungsgemäßen Rückstrich 1.3 versehene Proben wiesen nach dieser Prüfmethode eine um etwa 50% geringere Formaldehydabgabe auf, als solche mit herkömmlichem Rückstrich.

Ergänzend können auch die Längs- und/oder Querstoßseiten, d.h. insbesondere die Nut 1.4 und Feder 1.5 der Trägerplatte 1.1 mit dem Material des Rückstrichs 1.3 beschichtet sein.

## Patentansprüche

1. Paneel (1, 1'), insbesondere Fußbodenpaneel, mit einer Trägerplatte (1.1) aus Holzwerkstoff, deren Sicht- oder Oberseite mit einer durch ein Druckverfahren direkt aufgebrachten Dekorbeschichtung (1.2) versehen ist und deren Rückseite mit einem Rückstrich (1.3), vorzugsweise einem farbigem Rückstrich versehen ist, wobei die Dekorbeschichtung (1.2) aus einer auf die Trägerplatte (1.1) aufgetragenen farbigen Grundschicht und einem auf die Grundschicht mittels einer oder mehrerer gravierter Druckwalzen aufgedruckten Holz-, Fliesen- oder Fantasiedekor gebildet ist, **dadurch gekennzeichnet, dass** der Rückstrich (1.3) mindestens eine den Wasserdampfdiffusions-Durchlasswiderstand erhöhende Komponente und mindestens eine luftschadstoffbindende, insbesondere Formaldehyd bindende Komponente enthält, wobei der Rückstrich (1.3) eine Wasserdampfdiffusionswiderstandszahl von mindestens 150, vorzugsweise von mindestens 200, besonders bevorzugt von mindestens 300 aufweist, und wobei das Material des Rückstrichs (1.3) ein Hydrophobierungsmittel enthält.

2. Paneel nach Anspruch 1,
**dadurch gekennzeichnet, dass** die mindestens eine luftschadstoffbindende Komponente aus einem Polyamin besteht oder ein Polyamin enthält.

3. Paneel nach Anspruch 1 oder 2,
**dadurch gekennzeichnet, dass** die mindestens eine luftschadstoffbindende Komponente aus Polyaminoimin, Polyethylenimin, Polyvinylamin oder Mischungen hiervon gebildet ist.

4. Paneel nach einem der Ansprüche 1 bis 3,
**dadurch gekennzeichnet, dass** der Rückstrich (1.3) ein Flächengewicht von mindestens 9 g/m², vorzugsweise mindestens 12 g/m² aufweist.

5. Paneel nach einem der Ansprüche 1 bis 4,
**dadurch gekennzeichnet, dass** die Verbesserung des Wasserdampfdiffusions-Durchlasswiderstandes der mit dem Rückstrich (1.3) versehenen Trägerplatte (1.1) mindestens 200 x 10⁶ m² s Pa/kg, bevorzugt mindestens 260 x 10⁶ m² s Pa/kg, und besonders bevorzugt mindestens 290 x 10⁶ m² s Pa/kg gegenüber der unbehandelten Trägerplatte beträgt.

6. Paneel nach einem der Ansprüche 1 bis 5,
**dadurch gekennzeichnet, dass** die Längs- und/oder Querstoßseiten der Trägerplatte (1.1) ebenfalls mit dem Material des Rückstrichs (1.3) beschichtet sind.

7. Paneel nach einem der Ansprüche 1 bis 6,
**dadurch gekennzeichnet, dass** die Längs- und/oder Querstoßseiten der Trägerplatte (1.1) Profile (1.4, 1.5) zur formschlüssigen Verbindung des Paneels (1) mit einem entsprechenden Paneel (1') aufweisen.

## Claims

1. Panel (1,1'), in particular a floor panel, comprising a support board (1.1) made of wood-based material, the visible side or top of which is provided with a decorative covering (1.2) which is directly applied in a printing process and the back of which is provided with a rear coating (1.3), preferably a coloured rear coating, the decorative covering (1.2) being formed from a coloured base layer applied to the support board (1.1) and a wood-grain, tile or fantasy decor which is printed onto the base layer by means of one or more engraved printing rollers, **characterised in that** the rear coating (1.3) contains at least one component for increasing the water vapour diffusion permeability resistance and at least one air-pollutant-binding, more particularly formaldehyde-binding, component, the rear coating (1.3) having a water vapour diffusion resistance value of at least 150, preferably of at least 200, more preferably of at least 300, and the rear coating (1.3) material containing a water-repellent agent.

2. Panel according to claim 1, **characterised in that** the at least one air-pollutant-binding component consists of a polyamine or contains a polyamine.

3. Panel according to either claim 1 or claim 2, **characterised in that** the at least one air-pollutant-binding component is made of polyaminoimine, polyethyleneimine, polyvinylamine or mixtures thereof.

4. Panel according to any of claims 1 to 3, **characterised in that** the rear coating (1.3) has a weight per unit area of at least 9 g/m², preferably of at least 12 g/m².

5. Panel according to any of claims 1 to 4, **characterised in that** the improvement in the water vapour diffusion permeability resistance of the support board (1.1) provided with the rear coating (1.3) is at least 200 × 10⁶ m² s Pa/kg, preferably at least 260 x 10⁶ m² s Pa/kg, and more preferably at least 290 × 10⁶ m² s Pa/kg compared with the untreated support board.

6. Panel according to any of claims 1 to 5, **characterised in that** the longitudinal and/or transverse contact sides of the support board (1.1) are likewise coated with the material of the rear coating (1.3).

7. Panel according to any of claims 1 to 6, **characterised in that** the longitudinal and/or transverse contact sides of the support board (1.1) have profiles (1.4, 1.5) for connecting the panel (1) to a corresponding panel (1') with a positive fit.

## Revendications

1. Panneau de lambris (1, 1'), notamment panneau de lambris pour plancher, avec une plaque de support (1.1) en matériau dérivé du bois dont le côté visible ou supérieur est pourvu d'un revêtement décoratif (1.2) appliqué directement par un procédé d'impression et dont le côté arrière est pourvu d'une couche arrière (1.3), de préférence d'une couche arrière colorée, dans lequel le revêtement décoratif (1.2) est formé d'une couche de base colorée appliquée sur la plaque de support (1.1) et d'un décor de bois, carrelage ou fantaisie imprimé sur la couche de base au moyen d'un ou plusieurs rouleaux d'impression gravés, **caractérisé en ce que** la couche arrière (1.3) contient au moins un composant augmentant la résistance de perméabilité à la diffusion de vapeur d'eau et au moins un composant fixant les produits de pollution atmosphérique, fixant notamment le formaldéhyde, dans lequel la couche arrière (1.3) présente un indice de résistance à la diffusion de vapeur d'eau d'au moins 150, de préférence d'au moins 200, de manière particulièrement préférée d'au moins 300, et dans lequel le matériau de la couche arrière (1.3) contient un agent de hydrofugation.

2. Panneau de lambris selon la revendication 1,
**caractérisé en ce que** l'au moins un composant fixant les produits de pollution atmosphérique se compose d'une polyamine ou contient une polyamine.

3. Panneau de lambris selon la revendication 1 ou 2,
**caractérisé en ce que** l'au moins un composant fixant les produits de pollution atmosphérique est formé de polyaminoimine, polyéthylèneimine, polyvinylamine ou de mélanges de celles-ci.

4. Panneau de lambris selon l'une quelconque des revendications 1 à 3,
**caractérisé en ce que** la couche arrière (1.3) présente un poids superficiel d'au moins 9 g/m², de préférence d'au moins 12 g/m².

5. Panneau de lambris selon l'une quelconque des revendications 1 à 4,
**caractérisé en ce que** l'amélioration de la résistance de perméabilité à la diffusion de vapeur d'eau de la plaque de support (1.1) pourvue de la couche arrière (1.3) se monte à au moins 200 x 10⁶ m² s Pa/kg, de préférence au moins 260 x 10⁶ m² s Pa/kg et de manière particulièrement préférée au moins 290 x 10⁶ m² s Pa/kg par rapport à la plaque de support non traitée.

6. Panneau de lambris selon l'une quelconque des revendications 1 à 5,
**caractérisé en ce que** les côtés de joint longitudinaux et/ou transversaux de la plaque de support (1.1) sont également enduits du matériau de la couche arrière (1.3).

7. Panneau de lambris selon l'une quelconque des revendications 1 à 6,
**caractérisé en ce que** les côtés de joint longitudinaux et/ou transversaux de la plaque de support (1.1) présentent des profils (1.4, 1.5) pour la connexion par conjugaison de formes du panneau de lambris (1) à un panneau de lambris correspondant (1').
